# EUROPÄISCHE PATENTSCHRIFT

(11) **EP 1 232 657 B1**
(45) Veröffentlichungstag und Bekanntmachung des Hinweises auf die Patenterteilung: **31.10.2007**
(21) Anmeldenummer: 00987101.3
(22) Anmeldetag: 09.11.2000
(51) Int. Cl.: H04Q 3/72

(54) **VERFAHREN ZUM ERZEUGEN EINES WÄHLVERZEICHNISSES IN EINEM NETZWERKENDGERÄT UND KOMMUNIKATIONSNETZWERK FÜR EIN SOLCHES VERFAHREN**
METHOD FOR CREATING A DIALLING DIRECTORY IN A NETWORK TERMINAL AND A COMMUNICATION NETWORK FOR A METHOD OF THIS TYPE
PROCEDE POUR CREER UN REPERTOIRE DE NUMEROTATION DANS UN TERMINAL DE RESEAU, ET RESEAU DE COMMUNICATION POUR LA MISE EN OEUVRE DUDIT PROCEDE

(30) Priorität: 25.11.1999 DE 19956831
(43) Veröffentlichungstag der Anmeldung: 21.08.2002
(73) Patentinhaber: SIEMENS AKTIENGESELLSCHAFT, 80333 München (DE)
(72) Erfinder: BAUER, Josef, 80797 München (DE)
(86) Internationale Anmeldenummer: PCT/DE2000/003918
(87) Internationale Veröffentlichungsnummer: WO 2001/039517

(56) Entgegenhaltungen:
- EP-A- 0 554 625
- WO-A-96/02996

## Beschreibung

Die vorliegende Erfindung betrifft ein Verfahren zum Erzeugen eines Wählverzeichnisses in einem Wählverzeichnisspeicher eines ersten Netzwerkendgerätes, das durch Absetzen von Verbindungsdaten in einem Netzwerk eine Verbindung zu einem zweiten mit dem Netzwerk verbundenen Netzwerkendgerät herstellen kann. Die Erfindung betrifft auch ein Kommunikationsnetzwerk zum Ausführen eines solchen Verfahrens.

Netzwerkendgeräte im Sinne der Erfindung sind alle mit einem Netzwerk verbundenen Geräte, die zu einem weiteren, mit dem Netzwerk verbundenen Endgerät durch Wählen eine Verbindung herstellen können. Wählen im Sinne der Erfindung ist das Absetzen von Verbindungsdaten im Netzwerk, mit dem eine Verbindung zu einem weiteren Netzwerkendgerät hergestellt wird.

Die gebräuchlichsten Netzwerkendgeräte im Sinne der Erfindung sind Telefonendgeräte. Beim Wählen an einem Telefonendgerät werden die Verbindungsdaten als Impuls- oder Frequenzsignal codiert zum Herstellen der gewünschten Verbindung in das Telefonnetz abgesetzt. Neben dem Telefonnetz gibt es eine Vielzahl weiterer Datennetze, in welchen eine Verbindung durch Absetzen entsprechender Verbindungsdaten aufgebaut wird. Derartige Netze sind z.B. Datex-P oder BTX.

Die meisten üblichen Telefonendgeräte weisen einen Speicher auf, in den häufig gebrauchte Nummern gespeichert und mittels einer Kurzwahlfunktion aufgerufen werden können.

Es gibt auch Telefonendgeräte, die eine sogenannte Telefonbuchfunktion besitzen. Die Telefonbuchfunktion erlaubt das Abspeichern einer Nummer mit dem dazugehörigen Namen, so daß durch Auswahl des Namens die dazugehörige Nummer gewählt werden kann. Eine solche Telefonbuchfunktion erleichtert die Verwaltung einer großen Anzahl von Telefonnummern. Die mit der Telefonbuchfunktion zu speichernden Daten müssen über die Tastatur des Telefonendgerätes eingegeben werden.

WO 96/02996 offenbart ein Verfahren zum Erzeugen eines Wählverzeichnisses in einem Wählverzeichnisspeicher eines Netzwerkendgerätes, bei dem aus einem vom Wählverzeichnisspeicher unabhängigen Datenspeicher eine Telefonnummer ausgelesen werden und zusammen mit einem über ein Mikrofon oder eine Tastatur einzugebenden Kennzeichen im Wählverzeichnisspeicher gespeichert werden kann.

EP 0 554 625 A1 offenbart ein ähnliches Verfahren, bei dem allerdings kein vom Wählverzeichnisspeicher unabhängiger Datenspeicher gegeben ist.

Der Erfindung liegt die Aufgabe zugrunde, ein Verfahren zum einfachen und schnellen Erzeugen eines Wählverzeichnisses, insbesondere für eine Spracherkennungseinrichtung, in einem Netzwerkendgerät, insbesondere einem Telefonendgerät, zu schaffen. Ferner liegt der Erfindung die Aufgabe zugrunde ein für das erfindungsgemäße Verfahren geeignetes Kommunikationsnetzwerk zu schaffen.

Diese Aufgaben werden durch ein Verfahren mit den Merkmalen des Anspruchs 1 und durch ein Kommunikationsnetzwerk mit den Merkmalen des Anspruchs 11 gelöst. Vorteilhafte Ausgestaltungen der Erfindung sind in den Unteransprüchen angegeben.

Das erfindungsgemäße Verfahren wird zum Erzeugen eines Wählverzeichnisses in einem Wählverzeichnisspeicher eines ersten Netzwerkendgerätes eingesetzt. Das erste Netzwerkendgerät kann durch Absetzen von Verbindungsdaten in einem Netzwerk eine Verbindung zu einem zweiten mit dem Netzwerk verbundenen Netzwerkendgerät herstellen. Das Verfahren umfaßt folgende Schritte:
- Auslesen von einem den Verbindungsdaten zugeordnetem Kennzeichen aus einem vom Wählverzeichnisspeicher unabhängigen Datenspeicher, in welchem das Kennzeichen gespeichert ist, und
- Speichern der Verbindungsdaten zusammen mit dem Kennzeichen im Wählverzeichnisspeicher des ersten Netzwerkendgerätes.

Das Kennzeichen wird als Lautschrift im Wählverezeichnisspeicher gespeichert, damit mit einer einfachen Spracherkennungseinrichtung im entsprechenden Telefonendgerät eine bestimmte Telefonnummmer lediglich durch Sprechen des korrespondierenden Kennzeichens gewählt werden. Die Spracherkennungseinrichtung muß dann lediglich ermitteln, welches in Lautschrift gespeicherte Kennzeichen am besten zu dem gesprochenen akustischen Signal paßt. Es ist zweckmäßig, den Sprachwortschatz beim Wählvorgang auf die im Wählverzeichnisspeicher gespeicherten Kennzeichen zu beschränken, da dann die Zuordnung relativ einfach im Vergleich zu sonstigen Spracherkennungsvorgängen ist, bei welchen ein wesentlich größerer Wortschatz ausgewertet werden muß. Das Kennzeichen ist auch als Lautschrift im Datenspeicher gespeichert.

Nach einer Ausführungsform der Erfindung werden die in einem Verbindungsdatenspeicher des Netzwerkendgerätes gespeicherten Daten zum Auslesen aus dem Datenspeicher bzw. zum Speichern in den Wählverzeichnisspeicher verwendet. Ein solcher Verbindungsdatenspeicher ist z.B. ein Wahlwiederholungsspeicher eines Telefon- oder Faxgerätes. Bei digitalen Netzwerken, wie z.B. ISDN, werden beim Aufbau einer Verbindung die Verbindungsdaten (= Telefonnummer) übertragen und in einen Verbindungsdatenspeicher gespeichert. Anhand der gespeicherten Verbindungsdaten kann das entsprechende-Kennzeichen ermittelt und im Wählverzeichnisspeicher gespeichert werden.

Der Datenspeicher kann an einer zentralen Stelle des Netzwerkes angeordnet sein, wobei eine Vielzahl von Verbindungsdaten und Kennzeichen in Form einer Datenbank darin gespeichert sind. Beim Auslesen der darin gespeicherten Daten wird zwischen dem Netzwerkendgerät, in dessen Wählverzeichnisspeicher die Daten gespeichert werden sollen, und dem Datenspeicher über das Netzwerk eine Verbindung aufgebaut, über die die entsprechenden Daten zum Netzwerkendgerät übertragen und in dessen Wählverzeichnisspeicher eingetragen werden.

Der Datenspeicher kann jedoch auch eine Vielzahl von Datenspeicherelementen umfassen, die bspw. in den jeweiligen Netzwerkendgeräten angeordnet sind, und aus welchen bei einem Verbindungsaufbau automatisch die darin gespeicherten Daten ausgelesen und an den jeweiligen Kommunikationspartner übertragen werden. Die übertragenen Daten können auf Anforderung durch einen Benutzer in den Wählverzeichnisspeicher eingetragen werden.

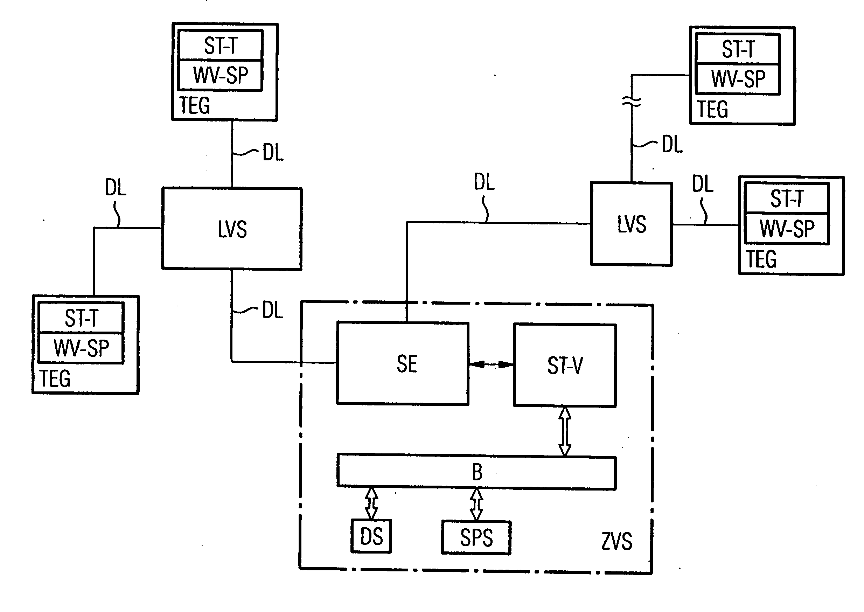

Die Erfindung wird im folgenden unter Bezugnahme auf die einzige Zeichnung beispielhaft näher erläutert.

In der Zeichnung ist ein erfindungsgemäßes Netzwerk dargestellt.

Die einzige Figur zeigt ein Telefonnetz mit einer zentralen Vermittlungsstelle ZVS, mehreren lokalen Vermittlungsstellen LVS, die jeweils über Datenleitungen DL mit der zentralen Vermittlungsstelle verbunden sind, und Telefonendgeräten TEG, die jeweils über weitere Datenleitungen DL mit den lokalen Vermittlungsstellen LVS verbunden sind.

Die Telefonendgeräte TEG weisen einen Wählverzeichnisspeicher WV-SP, in dem häufig gewählte Telefonnummern zusammen mit dem Namen des entsprechenden Ferngesprächteilnehmers gespeichert sind, und eine Steuereinheit ST-T auf, die Abläufe am Telefonendgerät TEG steuert. Zusätzlich zum Namen können weitere Informationen zum Ferngesprächteilnehmer, wie z.B. Adresse, Beruf oder dgl., im Wählverzeichnisspeicher gespeichert sein.

Die im Wählverzeichnisspeicher gespeicherten Telefonnummern können wie bei der bekannten Telefonbuchfunktion durch Auswählen des Namens ausgewählt und zum Aufbau einer Telefonverbindung gewählt werden.

Die zentrale Vermittlungsstelle ZVS weist eine Schalteinheit SE auf, die die einzelnen zur zentralen Vermittlungsstation führenden Telefonleitungen bzw. Kanäle schaltet und so entsprechende Telefonverbindungen auf- bzw. abbaut. Die Schalteinheit wird von einer Steuereinheit ST-V angesteuert. Die Steuereinheit ist mit einem internen BUS B verbunden, an dem ein Datenspeicher DS und ein Spracherkennungssystem SPS angeschlossen sind.

Das in der Fig. gezeigte Telefonnetz ist ein digital arbeitendes Telefonnetz, d.h., daß die über die Datenleitung übertragenen Signale digitalisiert sind und daß die zentrale Vermittlungsstelle als digitales Prozessorsystem ausgebildet ist. Die Audio/Digital-Wandlung wird in den einzelnen Telefonendgeräten ausgeführt.

Will ein Benutzer in dem Wählverzeichnisspeicher seines Telefonendgerätes einen neuen Eintrag einfügen, so setzt er an seinem Telefonendgerät ein vorbestimmtes Eintragungssignal ab, das über die Telefonleitungen DL und den lokalen Vermittlungsstellen LVS zur zentralen Vermittlungsstelle ZVS geleitet wird, wo es von der Steuereinheit ST-V erkannt wird.

Im Anschluß an das Eintragungssignal erwartet die Steuereinheit ST-V eine Spracheingabe des Benutzers. Dieser spricht den Namen und oder die Adresse, die das Kennzeichen zu einer bestimmten Telefonnummer bilden. Dieses Sprachsignal wird am Telefonendgerät digitalisiert und zur zentralen Vermittlungsstelle geleitet, wo die Steuereinheit ST-V das Sprachsignal an das Spracherkennungssystem SPS weiterleitet. Das Spracherkennungssystem SPS wandelt das Sprachsignal in Text. Text bedeutet einen maschinell verarbeitbaren Zeichencode, wie z.B. ASCII. Es ist jedoch auch möglich, daß das vom Benutzer gesprochene Kennzeichen als Text in Form einer Lautschrift umgesetzt und als Lautschrift weiter verarbeitet wird.

Anhand des von dem Spracherkennungssystem SPS ermittelten Textes liest die Steuereinheit ST-V aus dem Datenspeicher DS, in dem eine Datenbank mit Telefonnummern und zugehörige Kennzeichen gespeichert ist, die entsprechenden Telefonnummern und Kennzeichen aus und sendet sie an das Telefonendgerät, von welchem das Eintragungssignal abgesetzt worden ist. Die Steuereinheit ST-V der zentralen Vermittlungsstelle fungiert hierbei als Leseeinrichtung des Datenspeichers DS.

Am Telefonendgerät werden die empfangenen Daten automatisch von der Steuereinheit ST-T im Wählverzeichnisspeicher gespeichert. Die Steuereinheit ST-T fungiert somit als Speichereinrichtung zum Speichern des Kennzeichens im Wählverzeichnisspeicher.

Das Absetzen des Eintragungssignal kann durch eine vorbestimmte Tastenkombination am Telefon ausgelöst werden, wobei vorzugsweise hierfür eine spezielle Taste vorgesehen ist, bei deren Betätigung das Eintragungssignal ausgelöst wird.

Bei dem oben beschriebenen Verfahren zum Einfügen eines neuen Eintrags in den Wählverzeichnisspeicher muß der Benutzer lediglich eine einfache und immer gleich Tastenkombination oder sogar nur eine einzige Taste betätigen. Dies erleichtert wesentlich die Handhabung beim Einfügen eines neuen Eintrags im Wählverzeichnisspeicher. Dieses Verfahren ist--insbesondere für Telefonendgeräte mit einer kleinen Tastatur, wie z.B. für mobile Telefonendgeräten, geeignet.

Das Kennzeichen wird als Lautschrift im Wählverezeichnisspeicher WV-SP gespeichert, damit mit einer einfachen Spracherkennungseinrichtung im entsprechenden Telefonendgerät eine bestimmte Telefonnummmer lediglich durch Sprechen des korrespondierenden Kennzeichens gewählt werden. Die Spracherkennungseinrichtung muß dann lediglich ermitteln, welches in Lautschrift gespeicherte Kennzeichen am besten zu dem gesprochenen akustischen Signal paßt. Es ist zweckmäßig, den Sprachwortschatz beim Wählvorgang auf die im Wählverzeichnisspeicher WV-SP gespeicherten Kennzeichen zu beschränken, da dann die Zuordnung relativ einfach im Vergleich zu sonstigen Spracherkennungsvorgängen ist, bei welchen ein wesentlich größerer Wortschatz ausgewertet werden muß. Das Kennzeichen ist auch als Lautschrift im Datenspeicher DS gespeichert.

Bei einer ersten abgewandelten Ausführungsform der vorliegenden Erfindung wird von dem in vielen Telefonendgeräten vorhandenen Wahlwiederholungsspeicher Gebrauch gemacht. Löst der Benutzer des Telefonendgerätes in der oben beschriebenen Weise das Eintragungssignal aus, wird das Eintragungssignal zusammen mit der im Wahlwiederholungsspeicher gespeicherten Telefonnummer an die zentrale Vermittlungsstelle gesandt, wo die Steuereinheit anhand der übermittelten Telefonnummer aus dem Datenspeicher das zugehörige Kennzeichen ausliest und an das das Eintragungssignal absetzende Telefonendgerät sendet.

Am Telefonendgerät werden die Telefonnummer und das zugehörige Kennzeichen im Wählverzeichnisspeicher gespeichert.

Bei diesem abgewandelten Verfahren kann durch Auslösen des Eintragungssignals an einem Telefonendgerät die zuletzt an diesem Telefonendgerät gewählte Nummer zusammen mit dem entsprechenden Kennzeichen im Wählverzeichnisspeicher abgespeichert werden.

Bei digitalen Telefonnetzen, wie z.B. ISDN, ist es üblich, daß beim Aufbau einer Telefonverbindung die Telefonnummer des Telefonendgerätes, von dem die Verbindung angewählt worden ist, an das in Verbindung stehende weitere Telefonendgerät übertragen wird. Hierdurch steht auch am angewähltem Telefonendgerät die Telefonnummer des Gesprächspartners zur Verfügung.

Bei einem zweiten abgewandelten Verfahren kann die Funktion des Übertragens der Telefonnummer beim Anwählen dahingehend ausgenutzt werden, daß diese Telefonnummer in einen Verbindungsdatenspeicher am Telefonendgerät gespeichert wird, falls dieses Endgerät angewählt wird. Wird an diesem Telefonendgerät ein anderes Telefonendgerät angewählt, fungiert der Verbindungsdatenspeicher als Wahlwiederholungsspeicher, d.h., daß die gewählte Telefonnummer im Verbindungsdatenspeicher gespeichert wird. Beim Auslösen des Eintragungssignals wird die im Verbindungsdatenspeicher gespeicherte Telefonnummer an die zentrale Vermittlungsstelle gesandt, wo die Steuereinheit anhand der übermittelten Telefonnummer aus dem Datenspeicher das zugehörige Kennzeichen ausliest und an das das Eintragungssignal absetzende Telefonendgerät sendet.

Bei dieser Ausführungsform kann durch Auslösen des Eintragungssignals an einem Telefonendgerät die Nummer der letzten Verbindung, unabhängig davon, ob sie am Telefonendgerät angewählt oder gewählt worden ist, im Wählverzeichnisspeicher abgespeichert werden.

Bei einer dritten abgewandelten Ausführungsform wird eine Funktion ausgenutzt, mit der bei jedem Aufbau einer Telefonverbindung die Telefonnummer und das entsprechende Kennzeichen zu dem in Verbindung stehenden Telefonendgerät übertragen wird. An jedem Telefonendgerät steht-semit die Telefonnummer und das Kennzeichen des Gesprächspartners zur Verfügung. Diese Daten werden in einem am Telefonendgerät vorgesehenen Datenspeicher zwischengespeichert. Möchte ein Benutzer eines Telefonendgerätes die Telefonnummer und das entsprechende Kennzeichen im Wählverzeichnisspeicher abspeichern, so löst er das entsprechende Eintragungssignal aus, wodurch die Daten aus dem Datenspeicher in den Wählverzeichnisspeicher übertragen werden. Dies ist die technisch einfachste und eleganteste Lösung. Sie setzt jedoch die Funktion des automatischen Übertragens der Telefonnummer und des Kennzeichens voraus.

Die Erfindung ist oben anhand von Ausführungsbeispielen näher erläutert worden. Die Erfindung ist jedoch nicht auf diese Ausführungsbeispiele beschränkt. Die Erfindung ist z.B. nicht auf Telefonnetze beschränkt, sondern für alle Kommunikationsnetze geeignet, bei welchen zwei Netzwerkendgeräte eine paarweise Verbindung durch Übermitteln von Verbindungsdaten eingehen können.

Im Rahmen der vorliegenden Erfindung ist es auch möglich; daß der Benutzer zum Auslesen des Kennzeichens die Verbindungsdaten manuell eingeben kann.

Es ist auch möglich, daß bei Verwendung eines Spracherkennungssystems dieses im Telefonendgerät angeordnet ist. Bei einer solchen Ausführungsform ist es zweckmäßig das Kennzeichen in Lautschrift im Wählverzeichnis zu speichern. Hierdurch muß der Benutzer bei einem erneuten Aufruf der dem Kennzeichen zugeordneten Telefonnummer lediglich das Kennzeichen sprechen, das als solches von dem Spracherkennungssystem erkannt wird. Anhand des Wählverzeichnisses wird dem Kennzeichen die entsprechende Telefonnummer zugeordnet, die dann entweder automatisch gewählt oder dessen Kennzeichen dem Benutzer zur Kontrolle angezeigt wird, worauf dann der Benutzer den Wählvorgang entsprechend auslösen kann.

Beim sprechenden Eingeben eines Kennzeichens wird der der Spracherkennung zugrunde liegende Wortschatz alleine auf die im Wählverzeichnis gespeicherten Kennzeichen begrenzt. Hierdurch ist der vom Spracherkennungssystem zu bewertende Wortschatz sehr klein, was die Spracherkennung wesentlich vereinfacht und dessen Zuverlässigkeit entsprechend erhöht.

Die die Verbindungsdaten und die Kennzeichen enthaltende Datenbank kann auch im jeweiligen Netzwerkendgerät, z.B. in Form eines elektronisch lesbaren Datenträgers vorgesehen sein.

## Patentansprüche

1. Verfahren zum Erzeugen eines Wählverzeichnisses in einem Wählverzeichnisspeicher eines ersten Netzwerkendgerätes, das durch Absetzen von Verbindungsdaten in einem Netzwerk eine Verbindung zu einem zweiten mit dem Netzwerk verbundenen Netzwerkendgerät herstellen kann, umfassend die Schritte: Auslesen von einem den Verbindungsdaten zugeordnetem Kennzeichen aus einem vom Wählverzeichnisspeicher unabhängigen Datenspeicher, in welchem das Kennzeichen gespeichert ist, und
Speichern der Verbindungsdaten zusammen mit dem Kennzeichen im Wählverzeichnisspeicher des ersten Netzwerkendgerätes,
**dadurch gekennzeichnet,**
**daß** das Kennzeichen im Datenspeicher in Lautschrift gespeichert ist und daß das Kennzeichen in Lautschrift im Wählverzeichnisspeicher abgespeichert wird.

2. Verfahren nach Anspruch 1,
**dadurch gekennzeichnet,**
**daß** zum Auslesen des Kennzeichens die Verbindungsdaten von einem Benutzer des Netzwerkendgerätes manuell eingegeben werden und anhand der eingegebenen Verbindungsdaten das Kennzeichen ausgelesen wird.

3. Verfahren nach Anspruch 1,
**dadurch gekennzeichnet,**
**daß** zum Auslesen des Kennzeichens die Verbindungsdaten aus einem Verbindungsdatenspeicher des ersten Netzwerkendgerätes, wie z.B. einem Wahlwiederholungsspeicher, ausgelesen werden und anhand dieser Verbindungsdaten das Kennzeichen ausgelesen wird.

4. Verfahren nach Anspruch 1,
**dadurch gekennzeichnet,**
**daß** eine Umwandlung von gesprochenen Verbindungsdaten in Text im Netzwerkendgerät erfolgt.

5. Verfahren nach Anspruch 1,
**dadurch gekennzeichnet,**
**daß** eine Umwandlung von gesprochenen Verbindungsdaten in Text bei einer im Netzwerk angeordneten Spracherkennungseinrichtung erfolgt.

6. Verfahren nach einem der Ansprüche 1 bis 5,
**dadurch gekennzeichnet,**
**daß** im Datenspeicher eine Vielzahl von Verbindungsdaten und Kennzeichen in Form einer Datenbank gespeichert sind.

7. **Verfahren nach Anspruch 6,**
**dadurch gekennzeichnet,**
**daß** der Datenspeicher im Netzwerk an einer vom ersten Netzwerkendgerät unabhängigen Stelle angeordnet ist und zum Auslesen der Datenbank eine Verbindung vom ersten Netzwerkendgerät zum Datenspeicher über das Netzwerk aufgebaut wird.

8. Verfahren nach einem der Ansprüche 1 bis 8,
**dadurch gekennzeichnet,**
**daß** bei jedem Verbindungsaufbau zwischen den beiden Netzwerkendgeräten automatisch sowohl die Verbindungsdaten als auch das zugehörige Kennzeichen an das korrespondierende Netzwerkendgerät übertragen und in den an den Netzwerkendgeräten vorgesehenen Datenspeicher gespeichert werden, und die Verbindungsdaten und das Kennzeichen durch eine entsprechende Eingabe des Benutzers eines der Netzwerkendgeräte vom Datenspeicher in den Wählverzeichnisspeicher des Netzwerkendgerätes übertragen werden.

9. Verfahren nach einem der Ansprüche 1 bis 8,
**dadurch gekennzeichnet,**
**daß** das Netzwerkendgerät mit einer Einrichtung Lesen eines Datenträgers verbunden ist, und sich in dieser Einrichtung ein die Verbindungsdaten und die Kennzeichen umfassende Datenbank enthaltender Datenträger befindet, von dem das Netzwerkendgerät die Verbindungsdaten und/oder das zugehörige Kennzeichen ausliest.

10. Verfahren nach einem der Ansprüche 1 bis 9,
**dadurch gekennzeichnet,**
**daß** als Netzwerkendgeräte Telefonendgeräte verwendet werden, und
**daß** die Verbindungsdaten Telefonnummern und die Kennzeichen die zur jeweiligen Telefonnummer gehörenden Namen in Lautschrift sind.

11. Kommunikationsnetzwerk zum Ausführen eines Verfahrens nach einem der Ansprüche 1 bis 10, mit mehreren miteinander verbundenen Netzwerkendgeräten, die durch Absetzen von Verbindungsdaten im Kommunikationsnetzwerk eine paarweise Verbindung herstellen können, wobei zumindest eines der Netzwerkendgeräte einen Wählverzeichnisspeicher aufweist, in dem ein Wählverzeichnis gespeichert werden kann, und das Kommunikationsnetzwerk einen vom Wählverzeichnisspeicher unabhängigen Datenspeicher aufweist, in dem ein den Verbindungsdaten zugeordnetes Kennzeichen gespeichert ist, und eine Leseeinrichtung zum Auslesen des Kennzeichens aus dem Datenspeicher und eine Speichereinrichtung zum Speichern der Verbindungsdaten zusammen mit dem entsprechenden Kennzeichen in den Wählverzeichnisspeicher aufweist,
**dadurch gekennzeichnet,**
**daß** der Datenspeicher ein Datenspeicher ist, in dem das Kennzeichen in Lautschrift gespeichert ist, und daß der Wählverzeichnisspeicher ein Wählverzeichnisspeicher ist, in dem das Kennzeichen in Lautschrift abgespeichert wird.

12. Kommunikationsnetzwerk nach Anspruch 11,
**dadurch gekennzeichnet,**
**daß** am Netzwerkendgerät ein Verbindungsdatenspeieher vorgesehen ist, in dem jeweils die Telefonnummer der letzten Verbindung gespeichert ist, wobei die Leseeinrichtung derart ausgebildet ist, daß bei deren Betätigung das Kennzeichen anhand der im Verbindungsdatenspeicher gespeicherten Verbindungsdaten ausgelesen wird.

13. Kommunikationsnetzwerk nach Anspruch 11 oder 12,
**dadurch gekennzeichnet,**
**daß** ein Spracherkennungssystem in einem Netzwerkendgerät angeordnet ist.

14. Kommunikationsnetzwerk nach Anspruch 11, 12 oder 13,
**dadurch gekennzeichnet,**
**daß** ein Spracherkennungssystem im Kommunikationsnetzwerk unabhängig von den Netzwerkendgeräten angeordnet ist.

15. Kommunikationsnetzwerk nach einem der Ansprüche 11 bis 14,
**dadurch gekennzeichnet,**
**daß** der Datenspeicher im Kommunikationsnetzwerk unabhängig von den Netzwerkendgeräten angeordnet ist und im Datenspeicher eine Vielzahl von Verbindungsdaten und Kennzeichen in Form einer Datenbank gespeichert sind.

16. Kommunikationsnetzwerk nach einem der Ansprüche 11 bis 15,
**dadurch gekennzeichnet,**
**daß** die Leseeinrichtung und die Speichereinrichtung mit einer gemeinsamen Betätigungseinrichtung, wie z.B. einer Betätigungstaste versehen sind.

17. Kommunikationsnetzwerk nach einem der Ansprüche 11 bis 14,
**dadurch gekennzeichnet,**
**daß** der Datenspeicher eine Vielzahl von Datenspeicherelementen umfaßt, wobei in jedem Kommunikationsendgerät jeweils ein Datenspeicherelement angeordnet ist, in dem das Kennzeichen und/oder die Verbindungsdaten des Kommunikationsendgerätes, in dem das Datenspeicherelement angeordnet ist, gespeichert sind.

## Claims

1. Method for generating a dialing directory in a dialing directory memory of a first network terminal, which, by outputting connection data in a network, can set up a connection to a second network terminal connected to the network, comprising the steps:
reading out of an identifier assigned to the connection data from a data memory which is independent of the dialing directory memory and in which the identifier is stored, and
storage of the connection data together with the identifier in the dialing directory memory of the first network terminal, **characterized in that** the identifier is stored in the data memory in phonetic script, and **in that** the identifier is stored in phonetic script in the dialing directory memory.

2. Method according to claim 1, **characterized in that**, in order to read out the identifier, the connection data is manually input by a user of the network terminal and the identifier is read out by reference to the connection data which has been input.

3. Method according to claim 1, **characterized in that**, in order to read out the identifier, the connection data is read out from a connection data memory of the first network terminal, for example a redialing memory, and the identifier is read out by reference to this connection data.

4. Method according to claim 1, **characterized in that** a conversion of spoken connection data into text takes place in the network terminal.

5. Method according to claim 1, **characterized in that** a conversion of spoken connection data into text takes place in a voice recognition device arranged in the network.

6. Method according to one of claims 1 to 5, **characterized in that** a multiplicity of connection data items and identifiers are stored in the form of a database in the data memory.

7. Method according to claim 6, **characterized in that** the data memory is arranged in the network at a location which is independent of the first network terminal, and in order to read out the database a connection is set up from the first network terminal to the data memory via the network.

8. Method according to one of claims 1 to 8, **characterized in that** whenever a connection is set up between the two network terminals, both the connection data and the associated identifier are transmitted automatically to the corresponding network terminal and stored in the data memory provided on the network terminals, and the connection data and the identifier are transmitted from the data memory into the dialing directory memory of the network terminal by means of a corresponding input by the user of one of the network terminal.

9. Method according to one of claims 1 to 8, **characterized in that** the network terminal is connected to a device for reading a data carrier and a data carrier which contains the connection data and database comprising identifiers and from which the network terminal reads out the connection data and/or the associated identifier is located in this device.

10. Method according to one of claims 1 to 9, **characterized in that** telephone terminals are used as network terminals, and **in that** the connection data is telephone numbers and the identifiers are names associated with the respective telephone number in phonetic script.

11. Communications network for executing a method according to one of claims 1 to 10, with a plurality of network terminals connected to one another, said network terminals being able to set up a paired connection by outputting connection data in the communications network, at least one of the network terminals having a dialing directory memory in which a dialing directory can be stored, and the communications network having a data memory which is independent of the dialing directory memory and in which an identifier which is assigned to the connection data is stored, and having a reading device for reading out the identifier from the data memory and a memory device for storing the connection data together with the corresponding identifier in the dialing directory memory, **characterized in that** the data memory is a data memory in which the identifier is stored in phonetic script, and **in that** the dialing directory memory is a dialing directory memory in which the identifier is stored in phonetic script.

12. Communications network according to claim 11, **characterized in that** a connection data memory in which in each case the telephone number of the last connection is stored is provided in the network terminal, the reading device being embodied in such a way that when it is activated the identifier is read out by reference to the connection data stored in the connection data memory.

13. Communications network according to claim 11 or 12, **characterized in that** a voice recognition system is arranged in a network terminal.

14. Communications network according to claim 11, 12 or 13, **characterized in that** a voice recognition system is arranged in the communications network, independently of the network terminals.

15. Communications network according to one of claims 11 to 14, **characterized in that** the data memory is arranged in the communications network, independently of the network terminals, and a multiplicity of connection data items and identifiers are stored in the form of a database in the data memory.

16. Communications network according to one of claims 11 to 15, **characterized in that** the reading device and the memory device are provided with a common activation device, for example an activation pushbutton key.

17. Communications network according to one of claims 11 to 14, **characterized in that** the data memory comprises a multiplicity of data memory elements, a data memory element in which the identifier and/or the connection data of the communications terminal in which the data memory element is arranged are stored being respectively arranged in each communications terminal.

## Revendications

1. Procédé pour créer un répertoire de numérotation dans une mémoire de répertoire de numérotation d'un premier terminal de réseau capable d'établir, en transmettant des données de connexion dans un réseau, une liaison vers un second terminal de réseau relié au réseau, comprenant les étapes de :
lecture d'un identifiant associé aux données de connexion dans une mémoire de données indépendante de la mémoire de répertoire de numérotation et dans laquelle l'identifiant est enregistré et
enregistrement des données de connexion avec l'identifiant dans la mémoire de répertoire de numérotation du premier terminal de réseau,
**caractérisé en ce que** l'identifiant est enregistré en écriture phonétique dans la mémoire de données et **en ce que** l'identifiant est enregistré en écriture phonétique dans la mémoire de répertoire de numérotation.

2. Procédé selon la revendication 1, **caractérisé en ce que**, pour lire l'identifiant, les données de connexion sont entrées manuellement par un utilisateur du terminal de réseau et l'identifiant est lu sur la base des données de connexion entrées.

3. Procédé selon la revendication 1, **caractérisé en ce que**, pour lire l'identifiant, les données de connexion sont lues dans une mémoire de données de connexion du premier terminal de réseau, par exemple une mémoire de répétition de numérotation, et l'identifiant est lu sur la base de ces données de connexion.

4. Procédé selon la revendication 1, **caractérisé en ce qu'**une conversion de données de connexion parlées en texte est exécutée dans le terminal de réseau.

5. Procédé selon la revendication 1, **caractérisé en ce qu'**une conversion de données de connexion parlées en texte est exécutée dans un dispositif de reconnaissance vocale situé dans le réseau.

6. Procédé selon l'une des revendications 1 à 5, **caractérisé en ce qu'**une pluralité de données de connexion et d'identifiants sont enregistrés dans la mémoire de données sous forme d'une base de données.

7. Procédé selon la revendication 6, **caractérisé en ce que** la mémoire de données est située, dans le réseau, en un endroit indépendant du premier terminal de réseau et une liaison est établie par le biais du réseau du premier terminal de réseau vers la mémoire de données pour lire la base de données.

8. Procédé selon l'une des revendications 1 à 7, **caractérisé en ce que**, à chaque fois qu'une liaison est établie entre les deux terminaux de réseau, non seulement les données de connexion, mais également l'identifiant associé, sont transmis automatiquement au terminal de réseau correspondant et enregistrés dans la mémoire de données prévue au niveau des terminaux de réseau, et les données de connexion et l'identifiant sont transmis de la mémoire de données dans la mémoire de répertoire de numérotation du terminal de réseau grâce à une entrée correspondante de l'utilisateur de l'un des terminaux de réseau.

9. Procédé selon l'une des revendications 1 à 8, **caractérisé en ce que** le terminal de réseau est relié à un dispositif de lecture d'un support de données et un support de données contenant la base de données qui regroupe les données de connexion et les identifiants se trouve dans ce dispositif, support de données sur lequel le terminal de réseau lit les données de connexion et/ou l'identifiant associé.

10. Procédé selon l'une des revendications 1 à 9, **caractérisé en ce que** l'on utilise, en tant que terminaux de réseau, des terminaux téléphoniques et **en ce que** les données de connexion sont des numéros de téléphone et les identifiants sont les noms en écriture phonétique associés aux numéros de téléphone respectifs.

11. Réseau de communication pour l'exécution d'un procédé selon l'une des revendications 1 à 10, comprenant plusieurs terminaux de réseau reliés les uns aux autres qui sont capables d'établir une connexion par paire en transmettant des données de connexion dans le réseau de communication, au moins un des terminaux de réseau comprenant une mémoire de répertoire de numérotation dans laquelle un répertoire de numérotation peut être enregistré et le réseau de communication comprenant une mémoire de données indépendante de la mémoire de répertoire de numérotation et dans laquelle un identifiant associé aux données de connexion est enregistré, et un dispositif de lecture pour lire l'identifiant dans la mémoire de données et un dispositif d'enregistrement pour enregistrer les données de connexion avec l'identifiant correspondant dans la mémoire de répertoire de numérotation,
**caractérisé en ce que** la mémoire de données est une mémoire de données dans laquelle l'identifiant est enregistré en écriture phonétique et **en ce que** la mémoire de répertoire de numérotation est une mémoire de répertoire de numérotation dans laquelle l'identifiant est enregistré en écriture phonétique.

12. Réseau de communication selon la revendication 11, **caractérisé en ce que** l'on prévoit, au niveau du terminal de réseau, une mémoire de données de connexion dans laquelle est enregistré à chaque fois le numéro de téléphone de la dernière connexion, le dispositif de lecture étant exécuté de manière à ce que, lors de sa mise en marche, l'identifiant soit lu sur la base des données de connexion enregistrées dans la mémoire de données de connexion.

13. Réseau de communication selon la revendication 11 ou 12, **caractérisé en ce qu'**un système de reconnaissance vocale est situé dans un terminal de réseau.

14. Réseau de communication selon la revendication 11, 12 ou 13, **caractérisé en ce qu'**un système de reconnaissance vocale est situé dans le réseau de communication indépendamment des terminaux de réseau.

15. Réseau de communication selon l'une des revendications 11 à 14, **caractérisé en ce que** la mémoire de données est située dans le réseau de communication indépendamment des terminaux de réseau et une pluralité de données de connexion et d'identifiants sont enregistrés dans la mémoire de données sous forme d'une base de données.

16. Réseau de communication selon l'une des revendications 11 à 15, **caractérisé en ce que** le dispositif de lecture et le dispositif d'enregistrement sont pourvus d'un dispositif d'actionnement commun, telle une touche d'actionnement par exemple.

17. Réseau de communication selon l'une des revendications 11 à 14, **caractérisé en ce que** la mémoire de données comprend une pluralité d'éléments de mémoire de données, un élément de mémoire de données étant situé à chaque fois dans chaque terminal de communication, élément dans lequel sont enregistrés l'identifiant et/ou les données de connexion du terminal de communication dans lequel est situé l'élément de mémoire de données.
